# EUROPEAN PATENT SPECIFICATION

(11) **EP 1 582 783 B1**
(45) Date of publication and mention of the grant of the patent: **21.11.2012**
(21) Application number: 03782811.8
(22) Date of filing: 19.12.2003
(51) Int. Cl.: F16J 15/10, F16J 15/02, B60R 13/06, B60R 13/07, F16J 15/14

(54) **SEALING TAPE**
DICHTUNGSBAND
RACCORD

(30) Priority: 27.12.2002 JP 2002379695
(43) Date of publication of application: 05.10.2005
(73) Proprietor: Meguro Chemical Industry Co., Ltd., Sashima-gun, Ibaraki 306-0221 (JP)
(72) Inventor: MEGURO, Kitoshi, Souwa-cho Sashima-gun, Ibaraki 306-0221 (JP)
(74) Representative: Klunker . Schmitt-Nilson . Hirsch
(86) International application number: PCT/JP2003/016293
(87) International publication number: WO 2004/061339

(56) References cited:
- EP-A2- 0 799 875
- EP-A2- 0 799 875
- JP-A- 63 232 050
- JP-A- 63 232 050
- JP-U- 4 095 534
- JP-U- 62 201 101

## Description

### BACKGROUND OF THE INVENTION

### 1. Field of the Invention

The present invention relates to a sealing tape, and more particularly to a sealing tape for covering a joint portion or a joint shoulder portion of metal surface or metal plates disposed inside a car body of an automobile.

### 2. Description of the Related Art

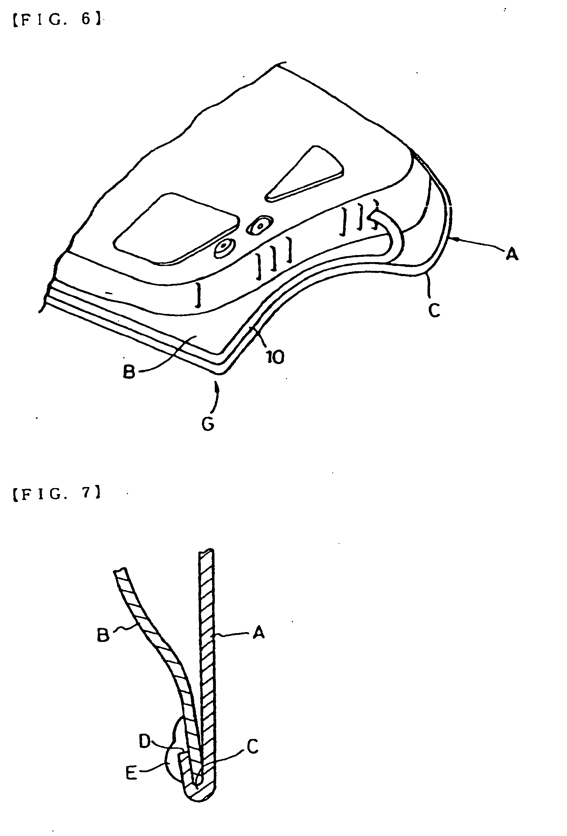

In the manufacture of automobiles, it has been the practice to apply a sealing agent to joint portions and joint shoulder portions in car bodies such as body panel joints and hemming portions in doors and hoods of the car bodies to prevent water and dust from entering the car bodies. More specifically, as shown in Fig. 7, in case that an inner metal plate B is inserted into and jointed to a bent portion C of an outer metal plate "A" which is provided with such bent portion C in its end portion, a joint shoulder portion D extending in a direction perpendicular to the plane of the drawing paper of Fig. 7 is hermetically covered with a strip of a sealing agent E having been squeezed out of a tube through its nozzle, so that the thus sealed joint shoulder portion D extends in the direction perpendicular to the drawing paper of Fig. 7.

Such application of the sealing agent E to the car body is carried out by an industrial robot during the manufacture of the car or automobile. Consequently, it is possible to control, with high accuracy, both the amount of the sealing agent E being squeezed out through the nozzle and a traveling distance of the nozzle, which enables the sealing agent E having been applied to the car body to assume a constant shape in any cross section, as shown in Fig. 7. The application of the sealing agent E to the car body is followed by the application of paint or coating materials.

When the joint portion of car body panels is damaged or deformed by an impact applied to the car, it is necessary to repair such deformed joint portion so as to have the joint portion return to its original shape in appearance.

In such repairing and paint application of the car body, after completion of repair in shape of the joint portion of the car body panels, the sealing agent E is applied to the joint portion in a manner such that: the nozzle of the tube, which is made of, for example, metal and filled with the sealing agent E, is manually brought into direct contact with a joint portion of the car body by an auto worker; and, the sealing agent E is also manually squeezed out of the tube through the nozzle thereof while the nozzle of the tube is manually moved along the course of the joint portion by the worker, whereby the application of the sealing agent E to the course of the joint portion is manually carried out by the worker.

In such manual operations, it is very difficult for the worker to keep constant the amount of the sealing agent E applied to the course of the joint portion even when the worker constantly his or her attention to his or her work in which the worker must constantly squeeze the sealing agent E out of the tube as he moves the tube along the course of the joint portion. In other words, in most cases, the worker fails to accurately trace the course of the joint portion. This results in an uneven finishing surface of the sealing agent E thus applied to the joint portion. Due to this failure, the joint portion of the body panels thus repaired fails to assume the same shape as that of a joint portion of body panels of a new car. The shape of the joint portion in the new car is shown in Fig. 7 in cross section.

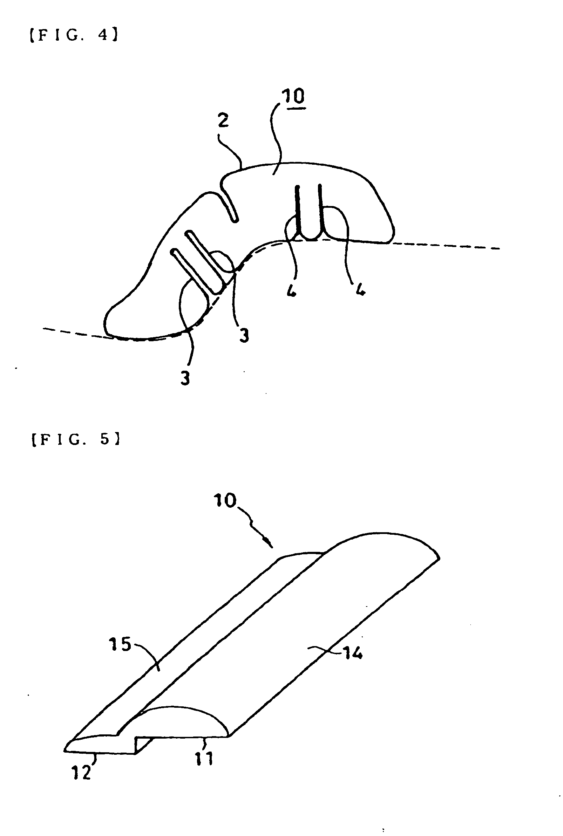

Prior to the present invention, the inventor of the subject application has already proposed a conventional sealing tape 10, which is shown in Fig. 5 in perspective view. This conventional sealing tape 10 is capable of hermetically seal up a joint portion of the car body panels in an easy manner and good in appearance in its finished surface. As shown in Fig. 5, the conventional sealing tape 10 assumes a relatively thick strip-like shape provided with a stepped bottom surface 11, 12. More specifically, the conventional sealing tape 10 is provided a shoulder portion in its bottom surface between an upper bottom surface portion 11 and a lower bottom surface portion 12 thereof. Further, the conventional sealing tape 10 is provided with: an elongated flange portion 15 the bottom of which is constructed of the lower bottom surface portion 12 of the sealing tape 10; and, an elongated curved portion 14 the bottom of which is constructed of the upper bottom surface portion 11 of the sealing tape 10, each of which portions 15, 14 extends in the longitudinal direction of the sealing tape 10 and has a thickness measured in a direction perpendicular to each of the bottom surface portions 12, 11. The conventional sealing tape 10 is made of vulcanized rubber-base material to resiliently keep its original shape. In use, the conventional sealing tape 10 is adhesively applied to a joint shoulder portion of metal plates (See, Japanese Utility Model Registration No. 3,004,875).

However, for example, as shown in Fig. 6, when the conventional sealing tape 10 is used in a joint shoulder portion D of metal surfaces or metal plates "A", B of an inner side of a car rear door (an upholstery lining panel of which is removed in Fig. 6), it is necessary to bend the sealing tape 10 at substantially right angles in a manner such that the sealing tape 10 extends along a corner portion G of the door to adhere to the corner portion G. In this case, the sealing tape 10 often slacks in or separates from the corner portion G of the door, which impairs the door in its surface finish quality. In order to improve the door in such surface finish quality, it is necessary to manually apply the sealing agent E to this corner portion G of the door as is in the conventional practice in application.

The above-mentioned slacking and separation of the sealing tape 10 occur because of the presence of resiliency in the conventional sealing tape 10. In other words, since the conventional sealing tape 10 is made of rubber-basematerial having been vulcanized and assumes a strip-like or elongated shape with resiliency, such slacking and separation of the conventional sealing tape 10 occur in the corner portion G of the door. In general, in the conventional sealing tape 10, its rubber-base material is vulcanized so that the sealing tape 10 assumes a fixed shape of a desired rubber product, because the rubber-base material not vulcanized varies in shape under pressure in use and is therefore not convenient in use. Consequently, such rubber-base material not vulcanized is not adequate for the purpose of the sealing tape, which must keep its shape for a long period of time in use.

Due to this, the applicant of the subject Patent application has developed a sealing tape of Japanese patent No. 3275028 corresponding to U.S. Patent No. 6,077,604. This patented sealing tape 10 comprises a rubber-base material and its accelerator, and is therefore capable of being bent at substantially at right angles along the corner portion C of the joint portion D of a car body (see Fig. 7). Further, this patented sealing tape 10 has a thickness in a direction perpendicular to its bottom surface 1 in its unvulcanized state.

Since the patented sealing tape 10 is capable of being applied to the joint portion D of the car body even in the unvulcanized state thereof, it is possible to bend the patented sealing tape 10 into any desired shape without causing any slacking or separation of the tape 10 to occur in the corner portion G of the door. However, when the joint shoulder portion D of the metal plates "A", B is too large in difference of level between its stepped surfaces, it is impossible for the patented sealing tape 10 thus applied to the joint shoulder portion D to properly keep its deformed shape even when kept in its unvulcanized state.

### SUMMARY OF THE INVENTION

In view of the above circumstances, the present invention was made to improve the patented sealing tape disclosed in Japanese patent No. 3275028, which corresponds to U.S. Patent No. 6, 077, 604. Consequently, it is an object of the present invention to provide a sealing tape, which is capable of keeping its shape after applied to a joint shoulder portion of metal plates of a car body and even when the joint shoulder portion of the metal plates is too large in difference of level between its stepped surfaces.

The above object of the present invention is accomplished by providing: a sealing tape (10) containing an unvulcanized rubber-base material and a vulcanization accelerator thereof, wherein the sealing tape (10) is capable of being bent substantially at right angles when applied to a repaired joint shoulder portion (D) of metal surfaces or metal plates ("A", B) disposed inside car body panels, wherein the repaired joint portion (D) has been repaired in shape and is covered by the sealing tape (10) so as to have the same look as that of a new joint, wherein the sealing tape (10) has a curved surface (2) in its upper surface in cross section and a thickness measured in a direction perpendicular to its bottom surface (1) in its unvulcanized state, CHARACTERIZED IN THAT:
at least one slit (3, 4, 5) is provided in each of the curved surface (2) and the bottom surface (1) of the sealing tape, wherein the slit (3, 4, 5) has a thickness of equal to or more than half the thickness of the sealing tape (10), and extends in the longitudinal direction of the sealing tape (10); and
the number of the slits (3, 4, 5) is equal to or more than the number of the metal surfaces or metal plates ("A", B).

The sealing tape having the above construction is further CHARACTERIZED IN THAT: the bottom surface (1) of the sealing tape (10) corresponds to the joint shoulder portion (D) of the metal surfaces or metal plates ("A", B) and is provided with the slits (3, 4) each of which has a thickness of equal to or more than half the thickness of the sealing tape (10) and extends in the longitudinal direction of the sealing tape (10).

The sealing tape of the present invention, when kept in its unvulcanized state, is applied to the joint shoulder portion of the metal plates of the car body. Since the sealing tape is provided with a plurality of slits the number of which corresponds to that of metal surfaces or metal plates of a car body, the sealing tape of the present invention is remarkably improved in flexibility in deformation during its application to the joint shoulder portion of the car body panels. This enables the sealing tape of the present invention to be brought into close contact with the joint shoulder portion of the metal plates even when the joint shoulder portion of the metal plates is too large in difference of level between the stepped surfaces of the metal surfaces or plates in the joint shoulder portion.

### BRIEF DESCRIPTION OF THE DRAWINGS

The above and other objects, advantages and features of the present invention will be more apparent from the following description taken in conjunction with the accompanying drawings in which:
Fig. 1 is a perspective view of an embodiment of the sealing tape of the present invention;
Fig. 2 is a perspective view of another embodiment of the sealing tape of the present invention;
Fig. 3 is a perspective view of further another embodiment of the sealing tape of the present invention;
Fig. 4 is a cross-sectional view of the sealing tape shown in Fig. 1 in use;
Fig. 5 is a perspective view of a conventional sealing tape;
Fig. 6 is a perspective view of the door, illustrating the sealing tape when applied to the joint shoulder portion of the metal plates used in the door; and
Fig. 7 is a sectional view of the door, illustrating the sealing agent applied to the joint shoulder portion of the metal plates used in the door.

### DETAILED DESCRIPTION OF THE PREFERRED EMBODIMENTS

The best modes for carrying out the present invention will be described in detail using embodiments of the present invention with reference to the accompanying drawings, wherein: the reference numeral/character 1 denotes a bottom surface of a sealing tape 10 of the present invention; 2 an upper curved surface of the sealing tape 10; each of 3, 4, 5 and 6 a slit formed in the sealing tape 10; 11 an upper bottom surface of the sealing tape 10; 12 a lower bottom surface of the sealing tape 10; "A" a first one of metal plates; B a second one of the metal plates; C a bent portion of the sealing tape 10; D a joint shoulder portion of the metal surfaces or plates "A", B; E a sealing agent applied to the conventional sealing tape; and, G denotes a corner portion of a door of a car or automobile.

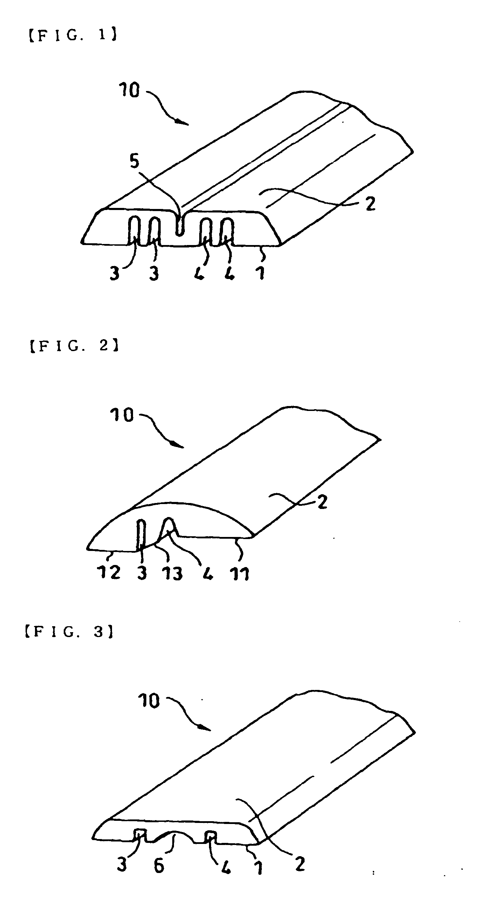

Now, an embodiment of a sealing tape 10 of the present invention will be described with reference to Fig. 1.

The sealing tape 10 is made of a sealing-tape material which contain an unvulcanized rubber-base material, a vulcanization accelerator thereof, an anti-oxidizing agent, a pigment and a bulk filler. The sealing tape 10 assumes an elongated shape with an upper and a lower surface. The lower surface of the sealing tape 10 forms a flat bottom surface 1, while the upper surface forms a curved surface 2, so that the sealing tape 10 assumes a substantially trapezoidal shape in cross section as a whole (see Fig. 1), and have a predetermined thickness in a first direction perpendicular to the bottom surface 1 thereof. The sealing tape 10 extends in a second direction perpendicular to the first direction mentioned above to assume a sufficiently elongated shape.

Further, the sealing tape 10 is provided with a plurality of slits 3, 4 in its bottom surface 1. Each of the slits 3, 4 has a depth substantially equal to or more than half the thickness of the sealing tape 10, and extends in the longitudinal direction of the sealing tape 10. These slits 3, 4 thus provided in the bottom surface 1 of the sealing tape 10 enhance the flexibility of the sealing tape 10 in deformation during its application to the joint shoulder portion D of the metal surfaces or metal plates "A", B. The reason why the depth of each of the slits 3, 4 is determined to be substantially equal to or more than half the thickness of the sealing tape 10 is that the slits 3, 4 each having such depth facilitate the deformation of the sealing tape 10 when applied to the joint shoulder portion D of the metal plates "A", B.

More specifically, in applying the sealing tape 10 to a joint shoulder portion D of the metal surfaces or metal plates "A" and B, as shown in Fig. 7, a first pair of the slits 3 and a second pair of the slits 4 are formed in the bottom surface 1 of the sealing tape 10 in a manner such that the first pair of the slits 3 and the second pair of the slits 4 correspond in position to the metal plates "A" and B, respectively.

As is clear from Fig. 1, another slit 5 is formed in the upper curved surface 2 of the sealing tape 10 in a manner such that the slit 5 corresponds in position to the joint shoulder portion D of the metal plates "A", B. This slit 5 has a depth of substantially equal to or more than half the thickness of the sealing tape 10 to extend in a longitudinal direction of the sealing tape 10.

Before its application to the joint shoulder portion D of the metal plates "A" and B, the sealing tape 10 thus provided with these slits 3, 4, 5 is kept in its unvulcanized state.

A vulcanization accelerator to be added to the rubber-base material of the sealing tape 10 is capable of facilitating vulcanization of the rubber-base material through a heating process of a paint coating operation of the repaired body panels. When the sealing tape 10 is vulcanized in such heating process, the tape 10 has a resiliency to keep its form resiliently. For example, such vulcanization accelerator is made of sulfur oxide and the like. In the sealing tape 10 of the present invention, vulcanization of the rubber-base material of the sealing tape 10 is conducted in the heating process included in the paint coating operation of the repaired car body panels. Due to this, before applied to the car body panel, the sealing tape 10 is kept in its unvulcanized state and therefore capable of being easily and freely deformed upon its application to the joint shoulder portion D of the metal plates "A", B. The anti-oxidizing agent, for example such as polybutene and the like, is added to the sealing-tape material to improve the sealing tape 10 in weatherability.

The pigment, for example such as titanium oxides and the like, is used to pigment the sealing tape 10 with a desired color. The bulk filler, for example such as calcium carbonate and the like, is used to swell the sealing-tape material therewith. Further, the bulk filer also functions to increase the sealing-tape material in strength.

Applied to the bottom surface 1 of the sealing tape 10 is an adhesive agent which covers the bottom surface's flat areas not including the slits 3, 4 of the bottom surface 1. The adhesive agent thus applied to the bottom surface 1 of the sealing tape 10 has its surface covered with a protective tape (not shown). This protective tape enables the sealing tape 10 to be wound into a roll together with the protective tape to facilitate storage of the sealing tape 10. The unvulcanized state of the sealing tape 10 enables the bottom surface 1 thereof to adhere to the adhesive agent easily. In other words, when the sealing tape 10 is in its vulcanized state, it is necessary to use a double-faced adhesive tape in the bottom surface 1 of the sealing tape 10, which has been vulcanized and is therefore poor in adhesiveness. In use, the double-faced adhesive tape is first cut so as to have the same shape or contour as that of the bottom surface 1 of the sealing tape 10, and then applied to the bottom surface 1 of the sealing tape 10 in place of the adhesive agent. Therefore, the double-faced adhesive tape is very cumbersome in use.

In the present invention, it is possible to directly apply the adhesive agent to the bottom surface 1 of the sealing tape 10 since the sealing tape 10 is still not vulcanized in use. Consequently, it is possible for the sealing tape 10 of the present invention to eliminate such cumbersome application work of the double-faced adhesive tape to the bottom surface 1 of the sealing tape 10. This makes it possible to reduce the manufacturing cost of the sealing tape 10 considerably.

Although the adhesive agent is applied to the bottom surface 1 of the sealing tape 10 in the above embodiment, it is also possible to use the double-faced adhesive tape in place of the adhesive agent, wherein the double-faced adhesive tape has one of its opposite surfaces applied to the bottom surface 1 of the sealing tape 10 and the other covered with a protective tape.

The sealing tape 10 is used to cover the joint shoulder portion D of the metal plates "A", B, as is clear from Fig. 7. In other words, in the joint shoulder portion D where the metal plates "A", B have their end portions brought into contact with each other, the sealing tape 10 is applied to one of such end portions of the metal plates "A", B to seal this one and prevent any foreign matter such as water, dust and the like from entering the other end portion of the metal plates "A", B. Consequently, the joint shoulder portion D covered with the sealing tape 10 is excellent in sealing properties.

Fig. 2 shows another embodiment of the sealing tape 10 not part of the claimed invention. The sealing tape 10 shown in Fig. 2 is made of the same material as that of the sealing tape 10 shown in Fig. 1. In construction, the sealing tape 10 of Fig. 2 is different from the sealing tape 10 of Fig. 1 in that: the former has a stepped bottom surface (11, 12) including a first bottom surface 11 and a second bottom surface 12, and has no slit in its upper surface; while the latter has not any stepped portion in its bottom surface and has the slit 5 in its upper curved surface 2. In the sealing tape 10 of Fig. 2, the adhesive agent is applied to both the first bottom surface 11 and the second bottom surface 12. After that, the protective tape is then applied to the adhesive agent thus applied to the stepped bottom surface of the sealing tape 10 of Fig. 2.

In other words, as is clear from Fig. 2, the bottom surface 1 of the sealing tape 10 comprises: the upper or first bottom surface 11; and, the lower or second bottom surface 12, which is slightly lower in height or level than the first bottom surface 11 and connected with the first bottom surface 11 through a connection surface 13 disposed therebetween. Further formed in the bottom surface 1 of the sealing tape 10 are a pair of the slits 3, 4. The sealing tape 10 of the embodiment shown in Fig. 2 has its upper surface curved to form the curved surface 2, so that the upper curved surface 2 of the sealing tape 10 of Fig. 2 is circularly curved in cross section.

Fig. 3 shows further another embodiment of the sealing tape 10 not part of the claimed invention. The sealing tape 10 shown in Fig. 3 is made of the same material as that of the sealing tape 10 of Fig. 1. Formed between the slits 3, 4 of the sealing tape 10 of Fig. 3 is a circularly curved slit 6, which is circularly curved in cross section. Further, the sealing tape 10 of Fig. 3 is different in construction from the sealing tape 10 of Fig. 1 in that the former has no slit in its upper surface, while the latter has the slit 5 in its upper curved surface. The circularly curved slit 6 formed in the bottom surface 1 of the sealing tape 10 of Fig. 3 corresponds in position to the joint shoulder portion D of the metal plates "A", B, as shown in Fig. 7.

Also in the sealing tape 10 of Fig. 3, the adhesive agent is applied to outer areas of the bottom surface 1, which outer areas are disposed outside the slits 3, 4. The adhesive agent thus applied to the bottom surface 1 of the sealing tape 10 is then covered by a protective tape (not shown)

Consequently, it is possible for the sealing tape 10 of the present invention shown in each of Figs. 1 to 3 to sufficiently cover the joint shoulder portion D of the metal plates "A", B even when the joint shoulder portion D is stepped in cross section to include a shoulder portion (D) and curved in its longitudinal axis along the corner portion G of the door. For example, as shown in Fig. 4, in case that the sealing tape 10 is used to cover the joint shoulder portion D of the metal plates "A", B in which the metal plate "A" forms a first metal plate "A" provided with a bent portion C in its end portion and the metal plate B forms a second metal plate B having its end portion inserted into the bent portion C of the first metal plate "A", the sealing tape 10 is applied to the joint shoulder portion D of these metal plates "A", B in a manner such that: the first bottom surface 11 and the second bottom surface 12 of the sealing tape 10 are disposed adjacent to the first metal plate "A" and the second metal plate B, respectively, wherein: as shown in Fig. 5, the first bottom surface 11 forms the bottom of the curved portion 14 of the sealing tape 10; and, the second bottom surface 12 forms the bottom of the flange portion 15 of the sealing tape 10. Consequently, it is possible for the sealing tape 10 of the present invention to firmly seal up the joint shoulder portion D of the metal plates "A", B by having the first bottom surface 11 and the second bottom surface 12 of the sealing tape 10 applied to the firs metal plate "A" and the secondmetal plate B, respectively, without fail.

Now, a method of repairs with the sealing tape 10 shown in Fig. 1 will be described.

When the car body panels are damaged in shape, it is necessary to repair the damaged body panels in shape through the sheet metal work. After completion of such sheet metal work of the damaged body panels, it is possible for the sealing tape 10 of the present invention to eliminate the conventional application of the adhesive agent to the sealing tape in applying the sealing tape 10 to the body panels thus repaired in shape. In other words, the sealing tape 10 is first cut into a desired length. Then, as shown in Fig. 4 in dotted lines, the bottom surface of the sealing tape 10 is directly applied to the joint shoulder portion D of the metal plates "A", B.

More specifically, in repairing the damaged body panels, an anti-corrosive agent is first applied to the joint shoulder portion Dof the metal plates "A", B inside the door. After that, the protective tape of the sealing tape 10 is peeled off from the sealing tape 10 to expose the adhesive bottom surface of the sealing tape 10. Then, the thus exposed adhesive bottom surface 1 of the sealing tape 10 is applied to the joint shoulder portion D of the metal plates "A", B so that the bottom surfaces 11, 12 of the sealing tape 10 seal up the joint shoulder portion D of the metal plates "A", B. At this time, when the joint shoulder portion D of the metal plates "A", B includes the corner portion G of the door, the sealing tape 10 is first deformed into the same shape or contour as that of the corner portion G of the door, and then applied to the corner portion G.

At this time, since the slits 3, 4 each having a depth of substantially equal to or more than half the thickness of the sealing tape 10 are provided in the bottom surface 1 of the sealing tape 10 to correspond in position to the metal surfaces or metal plates "A", B in the joint shoulder portion D thereof, it is easy to deform the sealing tape 10 according to the contour of the joint shoulder portion D of the metal surfaces or plates "A", B. Such easiness in deformation of the sealing tape 10 in application to the joint shoulder portion D of the metal surfaces or plates "A", B ensures that the sealing tape 10 is firmly fixed to the joint shoulder portion D of the metal surfaces or plates "A", B and therefore capable of being prevented from peeling off from the joint shoulder portion D.

Further, in this case, since the sealing tape 10 is still not vulcanized in use and therefore kept in its unvulcanized state, it is possible for the sealing tape 10 to take any shape in an easy manner in its application to the joint shoulder portion D of the metal surfaces or plates "A", B. Further, it is also possible for the sealing tape 10 to keep its shape as it is until the sealing tape 10 is deformed in shape under the influence of an external force applied thereto.

Next, the sealing tape thus applied to the repaired joint shoulder portion D of the metal surfaces or metal plates "A", B of the car body panels is subjected to the paint coating process in which the sealing tape 10 is coated with the same color of paint as that of the car body panel. In this paint coating process, a coating film is formed on the car body panels by using a coating spray unit. Then, in order to stabilize the thus coated coating film formed on the car body panels, a forced drying process (with some heat treatment) of the coating film is conducted for a period of 30 minutes at a temperature of approximately 70 degrees centigrade in a spray booth to have the coating film hardened or dried. Due to this, the sealing tape 10 applied to the car body panels is also vulcanized in the spray booth after completion of the forced drying process. It is difficult to deform the sealing tape 10 having been vulcanized. In other words, it is possible for the vulcanized sealing tape 10 to keep its fixed shape even when subjected to the external force.

In the sealing tape 10 having the above construction, since the sealing tape 10 kept in its unvulcanized state is capable of easily and freely varying in shape when applied to the repaired joint shoulder portion D of the metal surfaces or metal plates "A", B in the car body, and further since the sealing tape 10 is provided with the longitudinal slits 3, 4, 5 each extending in the longitudinal direction of the sealing tape 10 the number of which slits 3, 4, 5 corresponds to at least that of the metal surfaces of metal plates "A", B, the sealing tape 10 itself is remarkably improved in flexibility in its application to the repaired joint shoulder portion D of the car body, and therefore capable of adhering to the repaired joint shoulder portion D of the metal surfaces or metal plates "A", B much more tightly. Even when the sealing tape 10 is applied to the repaired joint shoulder portion D in which the surfaces of the metal plates "A", B are relatively large in difference in height or level, there is not observed any sagging and any peeling off of the sealing tape 10 from the bent portion C of the sealing tape 10 thus applied to the repaired joint shoulder portion D of the car body panels. Due to this, it is possible for a user to repair the damaged joint shoulder portion D of the car body panels in an easy manner by using the sealing tape 10 of the present invention.

### EXAMPLE

Now, an Example of the sealing tape 10 of the present invention will be described. This Example is given below by way of illustration and not by way of limitation of the scope of the present invention.

In producing the sealing tape 10 of the present invention, materials listed in the following Table 1 were mixed to prepare a mixture having a composition shown in the Table 1, and the mixture was then formed into a strip-like shape as a whole:

**TABLE 1:**

| Material | Amount |
|---|---|
| Rubber-base material | 40 parts |
| Sulfur oxide (vulcanization accelerator) | 10 parts |
| Polybutene | 12 parts |
| Titanium oxide | 10 parts |
| Calcium carbonate (i.e., bulk filler) | 28 parts |

In experiment, the sealing tape of this Example was applied to the repaired joint shoulder portion of the metal surfaces or metal plates. There was not observed any sagging and any peeling off of the sealing tape of the Example in any bent portion of the sealing tape applied to the repaired joint shoulder portion of the car body panels. Even after the paint coating operation of the car body panels performed after completion of application of the sealing tape to the repaired joint shoulder portion of the car body panels, i.e., even after the sealing tape applied to the car body was subjected to the heating treatment conducted in the paint coating operation, there was not observed any sagging and any peeling off of the sealing tape in any bent portion of the sealing tape thus heat-treated and therefore vulcanized to have a fixed shape similar to the repaired joint shoulder portion of the car body panels in boundary between the sealing tape and the repaired joint shoulder portion.

The sealing tape of the present invention enjoys the following effect: namely, since the sealing tape kept in its unvulcanized state is capable of easily and freely varying in shape when applied to the repaired joint shoulder portion of the metal surfaces or metal plates in the car body, and further since the sealing tape is provided with the longitudinal slits each extending in the longitudinal direction of the sealing tape the number of which slits corresponds to at least that of the metal surfaces of metal plates, the sealing tape itself is remarkably improved in flexibility in its application to the repaired joint shoulder portion of the car body, and therefore capable of adhering to the repaired j oint shoulder portion of the metal surfaces or metal plates much more tightly than the conventional sealing tape.

## Claims

1. A sealing tape (10) containing an unvulcanized rubber-base material and a vulcanization accelerator thereof, wherein the sealing tape (10) is capable of being bent substantially at right angles when applied to a repaired joint shoulder portion (D) of metal surfaces or metal plates ("A", B) disposed inside car body panels, wherein said repaired joint shoulder portion (D) has been repaired in shape and is covered by the sealing tape (10) so as to have the same appearance as that of a new joint portion, wherein the sealing tape (10) has a curved surface (2) in its upper surface in cross section and a thickness measured in a direction perpendicular to its bottom surface (1) in its unvulcanized state,
**CHARACTERIZED IN THAT**:
at least one slit (3, 4, 5) is provided in each of said curved surface (2) and said bottom surface (1) of the sealing tape, wherein said slit (3, 4, 5) has a thickness of substantially equal to or more than half the thickness of the sealing tape (10), and extends in the longitudinal direction of the sealing tape (10); and
the number of said slits (3, 4, 5) is equal to or more than the number of said metal surfaces or metal plates ("A", B) and **in that**:
said bottom surface (1) of the sealing tape (10) corresponds in position to said joint shoulder portion (D) of said metal surfaces or metal plates ("A", B) and is provided with said slits (3, 4) each of which has a thickness of substantially equal to or more than half the thickness of the sealing tape (10) and extends in the longitudinal direction of the sealing tape (10).

## Patentansprüche

1. Dichtungsband (10) beinhaltend ein unvulkanisiertes Gummi-basierendes Material und einen Vulkanisierungsbeschleuniger davon, wobei das Dichtungsband (10) dazu in der Lage ist, im Wesentlichen in rechten Winkeln gebogen zu werden, wenn es auf einem reparierten Verbund-Schulterbereich (D) von Metallflächen oder Metallplatten ("A", B) angewendet wird, die innerhalb von Autoverkleidungen angeordnet sind, wobei der reparierte Verbund-Schulterbereich (D) in der Gestalt repariert wurde und von dem Dichtungsband (10) überdeckt ist, sodass es die gleiche Erscheinung aufweist, wie die eines neuen Verbundbereichs, wobei das Dichtungsband (10) eine im Querschnitt gebogene Fläche (2) in seiner oberen Fläche und eine Dicke aufweist, die in einer zu seiner Bodenfläche (1) senkrechten Richtung im unvulkanisierten Zustand gemessen ist,
**dadurch gekennzeichnet, dass**:
zumindest ein Schlitz (3, 4, 5) in jeweils der gebogenen Fläche (2) und der Bodenfläche (1) des Dichtungsbandes bereitgestellt ist, wobei der Schlitz (3, 4, 5) eine Dicke aufweist, die im Wesentlichen gleich oder mehr als die Hälfte der Dicke des Dichtungsbandes (10) ist und sich in die Längsrichtung des Dichtungsbandes (10) erstreckt; und
die Anzahl der Schlitze (3, 4, 5) gleich oder mehr der Anzahl der Metallflächen oder Metallplatten ("A", B) ist, und dadurch, dass
die Bodenfläche (1) des Dichtungsbandes (10) in der Lage mit dem Verbund-Schulterbereich (D) der Metallflächen oder Metaliplatten ("A", B) übereinstimmt und mit den Schlitzen (3, 4) ausgestattet ist, wobei jeder eine Dicke aufweist, die im Wesentlichen gleich oder mehr als die Hälfte der Dicke des Dichtungsbandes (10) ist und sich in die Längsrichtung des Dichtungsbandes (10) erstreckt.

## Revendications

1. Ruban d'étanchéité (10) contenant une matière à base de caoutchouc non vulcanisé et un accélérateur de la vulcanisation de ce dernier, dans lequel le ruban d'étanchéité (10) peut être plié essentiellement à angle droit lorsqu'on l'applique sur une portion jointive réparée à épaulement (D) de surfaces métalliques ou de plaques métalliques (« A », B) disposées à l'intérieur de panneaux de carrosseries de voitures, ladite portion jointive réparée à épaulement (D) ayant été réparée quant à sa configuration et étant recouverte par le ruban d'étanchéité (10) de façon à présenter le même aspect que celui d'une nouvelle portion jointive, le ruban d'étanchéité (10) possédant une surface courbe (2) dans sa surface supérieure en section transversale et une épaisseur mesurée dans une direction perpendiculaire à sa surface inférieure (1) dans son état non vulcanisé, **caractérisé en ce que** : au moins une fente (3, 4, 5) est prévue dans chacune desdites surfaces, à savoir ladite surface courbe (2) et ladite surface inférieure (1) du ruban d'étanchéité, ladite fente (3, 4, 5) possédant une épaisseur essentiellement égale ou supérieure à la moitié de l'épaisseur du ruban d'étanchéité (10) et s'étendant dans la direction longitudinale du ruban d'étanchéité (10) ; et le nombres desdites fentes (3, 4, 5) est égal ou supérieur au nombre desdites surfaces métalliques ou desdites plaques métalliques (« A », B) ; et **en ce que** : ladite surface inférieure (1) du ruban d'étanchéité (10) correspond, quant à sa position, à celle de ladite portion jointive à épaulement (D) desdites surfaces métalliques ou desdites plaques métalliques (« A », B) et est munie desdites fentes (3, 4), chacune possédant une épaisseur essentiellement égale ou supérieure à la moitié de l'épaisseur du ruban d'étanchéité (10) et s'étendant dans la direction longitudinale du ruban d'étanchéité (10).
